Europäisches Patentamt

**(19)** European Patent Office

Office européen des brevets

**(11)** Publication number : **0 353 023 B1**

**(12)** # EUROPEAN PATENT SPECIFICATION

**(45)** Date of publication of patent specification :
**22.04.92 Bulletin 92/17**

**(51)** Int. Cl.⁵ : **C10B 25/10,** C10B 33/00,
F16J 13/16

**(21)** Application number : **89307539.0**

**(22)** Date of filing : **25.07.89**

**(54) Coke drum unheading device.**

The file contains technical information
submitted after the application was filed and
not included in this specification

**(30)** Priority : **29.07.88 US 226431**

**(43)** Date of publication of application :
**31.01.90 Bulletin 90/05**

**(45)** Publication of the grant of the patent :
**22.04.92 Bulletin 92/17**

**(84)** Designated Contracting States :
**DE GB**

**(56)** References cited :
**EP-A- 0 265 096**
**US-A- 1 874 833**

**(73)** Proprietor : **FLUOR CORPORATION**
**3333 Michelson Drive**
**Irvine California 92730 (US)**

**(72)** Inventor : **Antallfy, Leslie Peter**
**11946 Summerdale Drive**
**Houston Texas 77077 (US)**
Inventor : **Reeves, Marcus Ray**
**10111 Kanah Lane**
**Houston Texas 77090 (US)**
Inventor : **Alexander, Donnie M.**
**4060 Loma Alta**
**Corpus Christi Texas 78410 (US)**

**(74)** Representative : **Williams, Trevor John et al**
**J.A. KEMP & CO. 14 South Square Gray's Inn**
**London WC1R 5EU (GB)**

EP 0 353 023 B1

## Description

## BACKGROUND OF THE INVENTION

The field of the present invention is apparatus for dispensing and safely controlling bulk materials such as petroleum coke or other analogous products.

Facilities for the manufacture of bulk materials such as petroleum coke and the like usually include means for producing and storing the produced output prior to shipment. In the specific case of petroleum coke, high boiling petroleum fractions are processed in one or more large volume drums. Figure I illustrates a typical petroleum coke production facility comprising a pair of coke drums mounted in a concrete and/or steel support structure. The drums are positioned above an apron having openings forming the entrance to coke chutes extending below the apron.

In the petroleum coking process high boiling (greater than 425°C) hydrocarbons are heated to about 50°C and put into a large drum where thermal cracking of the molecules takes place. This thermal cracking produces small molecules which exit the drum, and larger molecules which remain in the drum to form a solid residue known as petroleum coke. When one drum fills up with the residue, the inlet hydrocarbon stream is switched to an empty drum. The full drum is then steamed to remove residual hydrocarbon and then the coke mass within the drum is cooled by quenching with water. After cooldown to about 95°C the quench water is drained, the coke drum bottom and top covers (heads) are removed, and the coke is removed using high pressure water jets. The heads are then replaced and the empty drum is available for the feed switch when the other drum fills up. The process is continued using this alternating drum technique.

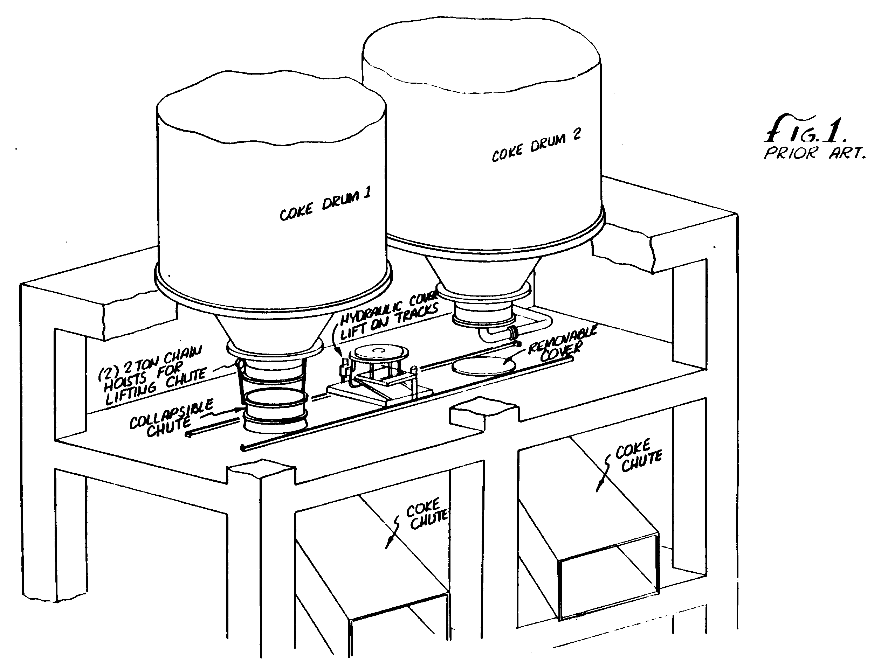

As shown in Figure 1, the outlets of the coke drums are closed during the coke production process step by means of steel drumheads that are secured to the drums by a plurality of bolts disposed about the circumference of the coke drum outlets. For a typical coke production facility, the drumheads are approximately seven feet in diameter and five inches thick.

The coke drums are alternately unheaded on a time schedule depending on the charge rate of the unit, the coke yield and the number of drums utilized. In current practice the drumheads are manually removed ("unheaded") by operators who remove the drumhead bolting using pneumatic impact wrenches. In order to maintain coke production schedules and a steady coker unit output stream, it is essential that the unheading operation be safely and expeditiously performed. In the production facility of Figure 1, unheading typically takes about ten to thirty minutes.

During the unheading of the coke drums of Figure 1, the drumhead is supported in place by an adjustable unheading cart that is typically mounted on tracks. After the head bolts are removed, the drumhead is lowered from the coke drum outlet. The head and the cart are then rolled to the side to fully expose the open outlet. A collapsible chute is hoisted from the deck to tie the coke drum outlet to the coke chute in the drum support structure to prevent spillage during coke removal. The coke is then "cut" from the drum by (a) high pressure water jet(s). This operation of removing coke from the drum takes around two to six hours. The drum is subsequently reheaded by reinstalling the head bolts. The reheading operation takes around fifteen to forty minutes.

The above-described practice has worked relatively satisfactorily over the years for the production of "sponge coke", which forms a mass inside the coke drum that will normally support itself and remain intact, even with the drumhead removed. However, if, as occasionally occurs, the coke drum fails to properly drain off water used for quenching the hot coke, a combined hydrostatic and coke load with a total weight around 100 tons could act on the drumhead, rendering bolt removal difficult and subjecting the unheading cart to excessive loads. An inadequate drain may also result in an uncontrolled discharge from the drum of high temperature (80-95°C) water, steam, coke slurry or coke particle streams as the drumhead is being lowered, subjecting personnel to a hazardous situation.

With the use of certain types of feed stocks which are becoming more prevalent, "shot coke" is produced in lieu of sponge coke. "Shot coke" has the consistency of small BB pellets which may or may not be agglomerated into large "coke balls." "Shot coke" and the associated "coke balls" may not form a self supporting mass in the coke drum and may therefore behave as a liquid to impose high hydraulic load on the head similar to water. This fluid-like behavior of the "shot coke" will force the drumhead down with considerable force onto the coke drum unheading cart. The coke can also flow out with significant velocity from the gap between the drum and the partially lowered head, a potential hazard to operating personnel, and, if the unheading cart is pinned in place by the partially lowered head, may spread onto the unheading deck and equipment below the deck. The coke's fluidity also increases the potential for inadequate drainage of quench water by its tendency to plug the drainage outlets, again leading to excessive loads on the drum head and the unheading cart. Thus, "shot coke" production entails the dual problems of safety due to excessive and uncontrolled discharge, and the disruption of production feed cycles due to excessive drum head and unheading card loading.

Accordingly, an alternative method of removing a coke drum head, providing the ability to withstand the high bottom head loads developed in the case of an inadequate quench water drain, controlling and directing hot water and particulate discharge via the bottom head, enabling the unheading operators to distance themselves from the coke drum outlet during drum head removal and maximising coke production throughput, would be desirable.

EP-A-0 256 096, on which the prior art portions of claims 1 and 13 are based discloses apparatus in which remotely controlled retaining means lower a drum head onto a truck for subsequent transverse removal from beneath the drum head. As compared therewith, the present invention, as defined in claims 1 and 13 removes the need for a transversely movable truck by pivoting the drum head to the lower end of the drum and also provides a simple safety lock which will support the drum head in its closed position against the load of a full drum so that the hydraulic means used for supporting the drum head during its pivotal movement is only required to be load bearing during the actual time of remote controlled movement. Because the drum head simply pivots out of the way there is nothing to impede opening movement of the drum head, should it be under substantial load due to the unsupported weight of relatively fluid "shot coke" in the drum.

## Summary of the Invention

The present invention is directed to a coke drum unheading device adapted to achieve the aforementioned objects. To that end, means are provided for moving the coke drum head between closed and open positions with respect to the coke drum, which means are operable from a location remote from the coke drum outlet. Such means are supported from a suitable fixed structure, preferably from the coke drum itself.

## BRIEF DESCRIPTION OF THE DRAWINGS

Figure 1 is a view of a prior art coke drum system with support structure having a section broken away for clarity.

Figure 2 is a view of a coke drum system with support structure constructed in accordance with the present invention, having a section broken away for clarity.

Figure 3 is a side view of a coke drum bottom section constructed in accordance with the present invention showing a drumhead in an open position.

Figure 4 is a front view of a coke drum bottom section constructed in accordance with the present invention showing a drumhead in a closed position.

Figure 5 is a cross-sectional view of the coke drum bottom section of Figure 4 taken along line 5-5.

Figure 6 is a detailed side view of a safety lock for locking a drumhead in a closed position.

## DETAILED DESCRIPTION OF THE PREFERRED EMBODIMENT

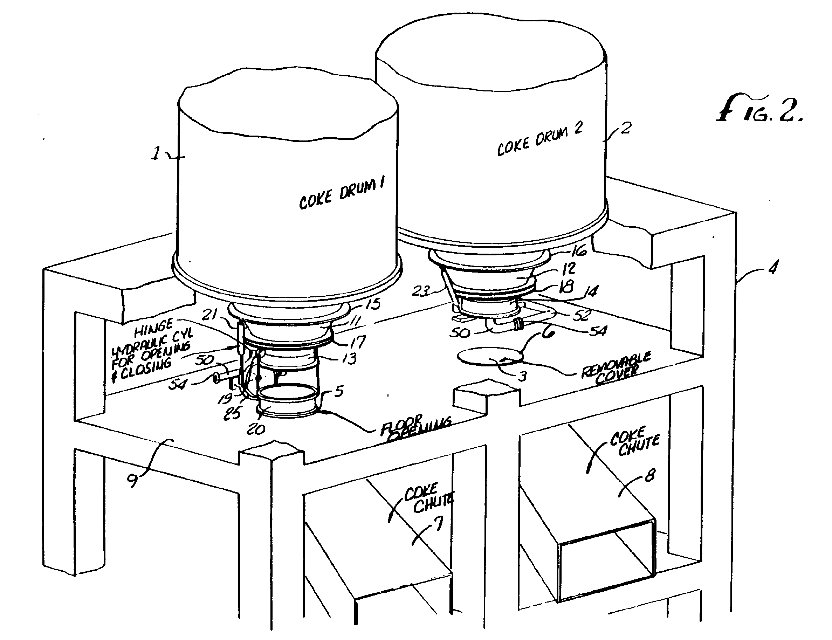

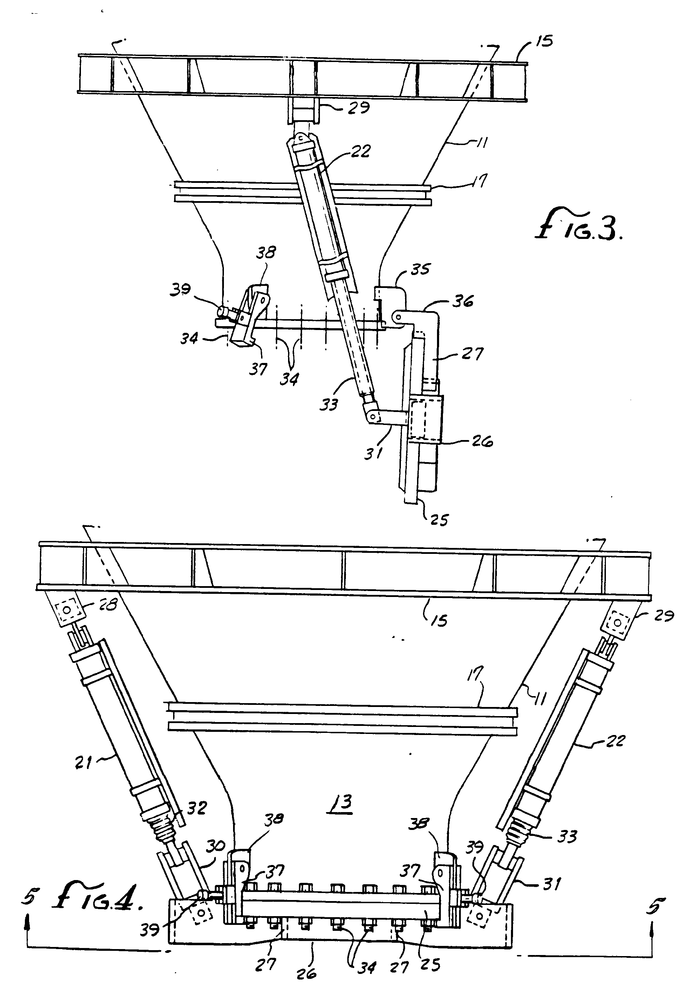

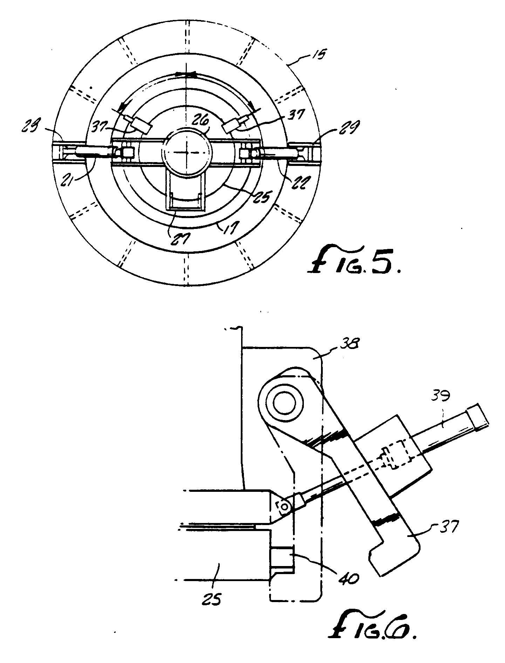

The preferred embodiment of the present invention will be described with reference to Figures 2-6.

Referring to Figure 2, the unheading device of the present invention is shown in a two-drum system configuration. A first coke drum 1 and a second coke drum 2 of generally cylindrical shape are positioned in a concrete and/or steel drum support structure 4 over a pair of openings 5 and 6, respectively, which are closed by removable covers 3 when coking operations are in progress. The openings 5 and 6 form the entrances to a pair of chutes 7 and 8 extending from the unheading deck 9 that transport the coke from the drums 1 and 2 to a concrete apron for removal and subsequent processing.

The coke drums 1 and 2 comprise generally frusto conical bottom sections 11 and 12 which terminate at generally cylindrical drum outlets 13 and 14, respectively. Circumferentially mounted to the bottom sections 11 and 12 are upper stiffener ring assemblies 15 and 16, respectively, that provide support for the actuator means to be described hereinafter. Below the ring assemblies 15 and 16 are additional stiffener ring assemblies 17 and 18 to provide support for a pair of two-ton chain hoists 19 for supporting the collapsible chutes 20.

Referring to Figures 2, 3, 4 and 5, the, upper stiffener ring assembly 15 on the coke drum 1 has attached thereto a pair of main load hydraulic cylinders 21 and 221 Similarly, the upper stiffener ring assembly 16 on the coke drum 2 has a pair of main load hydraulic cylinders 23 and 24 mounted thereon. Each pair of hydraulic cylinders 21, 22 and 23, 24 form an actuator system capable of resisting anticipated coke and hydrostatic loads during all phases of the unheading operation. Although the present embodiment discloses a hydraulic actuator system having one end connected to the coke drum, a fixed structure, the fixed structure may be provided by an unheading deck suitably reinforced. Other actuator systems would also be possible.

Although not shown in the figures, the actuator systems of the present invention are adapted for operation from locations remote from the coke drum outlets. This enables the unheading operators to avoid the vicinity of the coke drum outlets during unheading operations.

Each of the coke drums 1 and 2 also includes a drumhead 25 having a generally T-shaped cover stiffener comprising an actuator support portion 26 and a hinge support: portion 27 extending transversely to the actuator support portion 26.

Describing now the actuator system on the coke drum 1, the hydraulic cylinders 21 and 22 are attached to the upper stiffener ring assembly 15 by pairs of support lugs 28 and 29, respectively, using pins of conventional design to provide a pivotal connection. The hydraulic cylinders are attached to the drumhead 25 by means of universal joints 30 and 31 each of which are mounted by pins to the drumhead cover stiffener and one of the hydraulic cylinders to provide a pivotal connection. Hydraulic cylinder plunger dust covers 32 and 33 are provided to keep the cylinder plungers free of coke and other foreign matter.

To secure the drumheads 25 to the coke drums when the heads are in a closed position, a circumferential arrangement of bolts 34 is provided extending through mating circumferential flanges on the coke drum outlets 13, 14 and the drumheads 25.

Mounted to the outlets 13 and 14 of the coke drums 1 and 2 are pairs of hinge tabs 35. The drumheads 25, in turn, are provided with hinge tabs 36 extending from the hinge support portions 27 of the cover stiffeners. A pin connecting the hinge tabs 35 and 36 provides a pivotal connection between each drumhead 25 and a respective coke drum 1 and 2. Other forms of movable connection would also be possible.

Each coke drum 1 and 2 is provided with a pair of safety lock devices 37 that secure the drumheads 25 in place while operators are working thereunder to prevent accidental opening in the event of a hydraulic line or cylinder rupture. The safety locks 37, shown in detail in Figure 6, are pivotally mounted to the drum outlets 13 and 14 by means of safety lock support tabs 38. The safety locks 37 are pivotable between closed and open positions by means of actuators 39. In the closed position the safety locks 37 are aligned with tabs 40 mounted to the drumheads 25 which are sized to support anticipated coke and hydrostatic loads.

Referring to Figure 2, lines 50 and 52 serve to feed hot hydrocarbon to the appropriate drum, and following completion of the coking portion of the cycle serve to remove fluid from that drum. The lines 50 and 52 are joined with a flanged connection 54. The line 50 is adapted to remain fixed to the drumhead. During unheading operations, a connection 54 is broken to separate the lines 50 and 52 and permit the drumhead, together with the line 50 to be displaced from the coke drum outlet.

Thus, an actuator controlled unheading device has been described that is operable from a location remote from a drum outlet and which is capable of withstanding high loads. While embodiments and applications of this invention have been shown and described, it will be apparent to those skilled in the art that many more modifications are possible without departing from the inventive concepts herein.

## Claims

1. Coking apparatus comprising a coke drum body (1) having an outlet (13) at its lower end, a coke drum head (25) configured to cover and close said outlet, retaining means (34) for retaining the drum head (25) in position closing said outlet (13), and remotely controlled hydraulic means (21,22) for moving the coke drum head (25) from its position closing the outlet (13) following release of said retaining means (34) characterised in that said coke drum head (25) is mounted to the drum body (1) for pivotal movement to and from its outlet closing position under the control of said hydraulic means which comprises a hydraulic actuator piston and cylinder (21,22) connected between said drum head (25) and a location (28,29) in fixed relation to said drum body and in that a releasable safety lock means (37) is mounted to the drum body for holding the drum head in its closed position to prevent accidental pivoting of the drum head in the event of loss of hydraulic fluid pressure in said hydraulic actuator during release of said retaining means.

2. Apparatus as claimed in claim 1, wherein pivotal mounting means for said drum head comprises: a flange hinge tab (35) mounted to said coke drum body (1); a cover hinge tab (36) mounted to said coke drum head (25) and a pin joining said flange hinge tab (35) and said cover hinge tab (36).

3. Apparatus as claimed in either preceding claim, wherein a pair of hydraulic actuator cylinders (21,22) are operatively mounted to pivot said drum head (25) to open and close said outlet (13).

4. Apparatus as claimed in claim 3, further including a pair of universal joints (30,31) operatively positioned between the drum head (25) and the hydraulic actuators (21,22) whereby extension of the hydraulic actuators (21,22) causes pivoting of the drum head (25) relative to the discharge outlet (13).

5. Apparatus as claimed in any preceding claim, further including stiffener means (15) mounted on the lower portion (11) of said drum body for supporting said actuator (21,22), said stiffener means including one or more mounting lugs (29) to provide support for said actuator (21,22).

6. Apparatus as claimed in claim 5, wherein the drum body (1) has an upper cylindrical portion and a lower frustoconical portion (11) terminating at a cylindrical drum outlet (13); the stiffener means comprising a stiffener ring (15) circumferentially mounted on said frustoconical lower portion, said stiffener ring including one or more mounting lugs (29) to provide actuator support.

7. Apparatus as claimed in any preceding claim, wherein said drum head (25) is circular and configured to mate with said drum outlet and has mounted thereto a generally T-shaped cover stiffener including an actuator support portion and a hinge support portion, said hinge support portion having a cover hinge tab (35) extending therefrom, and said actuator support portion having pivotally mounted to the ends thereof a pair of universal joints (30,31) to provide connection to a pair of actuators.

8. Apparatus as claimed in any preceding claim, wherein the drum head (25) has an orifice therethrough, a line (50) connected to the drum head at its orifice extending outwardly therefrom.

9. Apparatus as claimed in claim 8, wherein a feed line (52) is removably connected to the end of said line (50) remote from said drum head.

10. Apparatus as claimed in any preceding claim, in which said safety lock means (37) is pivotally mounted to said drum outlet by support tabs (38), said safety lock means being pivotable between closed and open positions by an actuator (39).

11. Apparatus as claimed in any preceding claim, in which said drum (1) has a frustoconical section (11) adjacent said outlet (13).

12. Apparatus as claimed in claim 8, in which the upper end of the or each hydraulic actuator (21,22) is fixed adjacent the upper end of said frustoconical drum section.

13. A delayed coking method, comprising preheating the hydrocarbon feed to a container drum (1) having a discharge outlet (13) and adapted to produce petroleum coke to induce thermal cracking of hydrocarbon molecules in said hydrocarbon feed and thereby to produce a mass of petroleum coke; subsequently introducing steam into the container drum (1) sufficient in temperature and quantity to remove residual hydrocarbon from hydrocarbon feed and petroleum coke remaining in the container; and thereafter opening the drum (1) by moving, using remotely controlled hydraulic actuator means (21,22), a drum head (25) from a closed position over the discharge outlet (13) to an open position characterised in that a safety lock (37) is engaged between the drum (1) and the drum head (25) before release of the means (34) retaining the drum head in its closed position and is then disengaged following release of the retaining means (34) to permit the hydraulic actuator means (21,22) pivotally to move the drum head about an axis of pivotal connection to the drum (1) from its outlet closing position to a downwardly depending open position.

**Patentansprüche**

1. Koksvorrichtung, umfassend einen Koksbehälterkörper (1) mit einem Auslaß (13) an seinem unteren Ende, einen zum Bedecken und Verschließen des Auslasses angebrachten Koksbehälterkopf (25), Haltemittel (34) zum Halten des Behälterkopfes (25) in der den Auslaß (13) verschließenden Position, und ferngesteuerte Hydraulikmittel (21,22) zum Bewegen des Koksbehälterkopfes (25) aus der den Auslaß (13) verschließenden Position nach dem Lösen der Haltemittel (34), dadurch gekennzeichnet, daß der Koksbehälterkopf (25) so an dem Behälterkörper (1) montiert ist, daß er in und aus seiner den Auslaß verschließenden Position geschwenkt werden kann, wobei er durch die Hydraulikvorrichtung, die einen zwischen dem Behälterkopf (25) und einer in fester Beziehung zu dem Behälterkörper stehenden Stelle befestigten hydraulischen Betätigungskolben und -zylinder (21,22) aufweist, gesteuert wird, und daß eine lösbare Sicherheitssperre (37) an dem Behälterkörper befestigt ist, die den Behälterkopf in der geschlossenen Position hält, um ein ungewolltes Schwenken des Behälterkopfes im Falle eines Druckverlustes der Hydraulikflüssigkeit der hydraulischen Betätigungsvorrichtung während des Lösens der Haltemittel zu verhindern.

2. Vorrichtung nach Anspruch 1, dadurch gekennzeichnet, daß die Schwenkbefestigung für den Behälterkopf ein am Koksbehälterkörper (1) befestigtes flanschförmiges Scharnierteil (35), ein am Koksbehälterkopf (25) angebrachtes Deckelscharnierteil (36) und einen das flanschförmige Scharnierteil (35) und das Deckelscharnierteil (36) verbindenden Bolzen umfaßt.

3. Vorrichtung nach einem der beiden vorhergehenden Ansprüche, dadurch gekennzeichnet, daß ein Paar von hydraulischen Betätigungszylindern (21,22) betriebsfähig montiert ist, um den Behälterkopf (25) zum öffnen und Schließen des Auslasses (13) zu schwenken.

4. Vorrichtung nach Anspruch 3, gekennzeichnet durch ein Paar von betriebsfähig zwischen dem Behälterkopf (25) und den hydraulischen Betätigungszylindern (21,22) angebrachten Kardangelenken (30,31), wodurch ein Ausfahren der hydraulischen Betätigungszylinder (21,22) ein Schwenken des Behälterkopfes (25) relativ zum Entleerungsauslaß bewirkt.

5. Vorrichtung nach einem der vorhergehenden Ansprüche, dadurch gekennzeichnet, daß sie außerdem am unteren Teil (11) des Behälterkörpers montierte Versteifungsmittel (15) zum Tragen der Betätigungseinrichtung (21,22) aufweist, wobei die Versteifungsmittel ein oder mehrere Halteaugen (29) zum Abstützen der Betätigungseinrichtung (21,22) aufweisen.

6. Vorrichtung nach Anspruch 5, dadurch gekennzeichnet, daß der Behälterkörper (1) einen oberen, zylindrischen Teil und einen unteren kegelstumpfförmigen Teil (11) aufweist, der in einem zylindrischen Behälterauslaß (13) endet, wobei die Versteifungsmittel einen am Umfang des kegelstumpfförmigen unteren Teils montierten Versteifungsring (15) aufweisen, wobei dieser Versteifungsring ein oder mehrere Halteaugen zum Abstützen der Betätigungsvorrichtung aufweist.

7. Vorrichtung nach einem der vorhergehenden Ansprüche, dadurch gekennzeichnet, daß der Behälterkopf (25) kreisförmig und so gestaltet ist, daß er zum Behälterauslaß paßt und eine an ihm montierte, im wesentlichen T-förmige Dekkelversteifung aufweist, die einen Teil zum Abstützen der Betätigungseinrichtung und einen Teil zum Abstützen des Scharniers aufweist, wobei sich vom Teil zum Abstützen des Scharniers weg ein Deckelscharnierteil erstreckt, und an den Enden des Teils zum Abstützen der Betätigungseinrichtung ein Paar Kardangelenke (30,31) zur Verbindung mit einem Paar Betätigungsvorrichtungen montiert ist.

8. Vorrichtung nach einem der vorhergehenden Ansprüche, dadurch gekennzeichnet, daß der Behälterkopf (25) eine Durchgangsöffnung aufweist, von der weg sich eine an seiner öffnung mit dem Behälterkopf verbundene Leitung (50) nach außen erstreckt.

9. Vorrichtung nach Anspruch 8, dadurch gekennzeichnet, daß eine Zuführungsleitung (52) entfernt von dem Behälterkopf abnehmbar mit dem Ende der Leitung (50) verbunden ist.

10. Vorrichtung nach einem der vorhergehenden Ansprüche, dadurch gekennzeichnet, daß die Sicherheitssperre (37) über Haltenasen (38) schwenkbar an dem Behälterauslaß befestigt ist, wobei die Sicherheitssperre durch eine Betätigungseinrichtung (39) zwischen einer geschlossenen und einer offenen Position schwenkbar ist.

11. Vorrichtung nach einem der vorhergehenden Ansprüche, dadurch gekennzeichnet, daß der Behälter (1) einen an den Auslaß (13) anschließenden kegelstumpfförmigen Teil (11) aufweist.

12. Vorrichtung nach Anspruch 8, dadurch gekennzeichnet, daß das obere Ende der oder jeder hydraulischen Betätigungsvorrichtung (21,22) anschließend an das obere Ende des kegelstumpfförmigen Behälterteils befestigt ist.

13. Verzögertes Kokungsverfahren, umfassend das Vorheizen der Kohlenwasserstoffcharge für einen für das Herstellen von Petrolkoks ausgelegten Trommelbehälter (1) mit einem Entleerungsauslaß (13) zum Anregen von thermischem Cracken von Kohlenwasserstoffmolekülen in der Kohlenwasserstoffcharge und dadurch das Herstellen einer Menge von Petrolkoks, anschließend das Einleiten von Dampf in den Trommelbehälter (1), der in Temperatur und Menge ausreichend ist, um restliche Kohlenwasserstoffe aus der Kohlenwasserstoffcharge und dem im Trommelbehälter verbleibenden Petrolkoks zu entfernen, und darauf das öffnen des Trommelbehälters (1) durch Bewegen eines Behälterkopfes (25) von einer geschlossenen Position über dem Entleerungsauslaß (13) in eine offene Position unter Verwendung einer ferngesteuerten hydraulischen Betätigungseinrichtung (21,22), dadurch gekennzeichnet, daß vor dem Lösen der Mittel (34), die den Behälterkopf in seiner geschlossenen Position halten, eine Sicherheitssperre (37) zwischen dem Trommelbehälter (1) und dem Behälterkopf (25) eingeschaltet wird und diese dann nach dem Lösen der Haltemittel (34) außer Eingriff gebracht wird, um zu ermöglichen, daß die hydraulische Betätigungseinrichtung (21,22) den Behälterkopf um eine Schwenkachse, die ihn mit dem Behälter (1) verbindet, aus seiner den Auslaß verschließenden Position in eine nach unten hängende offene Position schwenkt.

**Revendications**

1. Dispositif de cokéfaction comportant un corps de tambour à coke (1) possédant un orifice de sortie (13) à son extrémité inférieure, une tête de tambour à coke (25) configurée pour recouvrir et fermer ledit orifice de sortie, des moyens de retenue (34) pour retenir la tête de tambour (25) en position de fermeture dudit orifice de sortie (13), et des moyens hydrauligues commandés à distance (21,22) pour déplacer la tête de tambour à coke (25) de sa position de fermeture de l'orifice de sortie (13) après dégagement desdits moyens de retenue (34), caractérisé en ce que ladite tête de tambour à coke (25) est montée sur le corps de tambour (1) pour un déplacement à pivotement vers et depuis sa position de fermeture de l'orifice de sortie sous la commande desdits moyens hydrauliques gui comportent un organe d'actionnement hydraulique à cylindre et piston (21,22) monté entre ladite tête de tambour (25) et un emplacement (28,29) en relation fixe par rapport audit corps de tambour, et en ce qu'un organe de verrouillage de sécurité (37) pouvant être dégagé est monté sur le corps de tambour pour maintenir la tête de tambour dans sa position de fermeture pour empêcher un pivotement accidentel de la tête de tambour dans le cas d'une perte de pression de fluide hydraulique dans ledit organe d'actionnement hydraulique durant un dégagement desdits moyens de retenue.

2. Dispositif selon la revendication 1, dans lequel les moyens de montage à pivotement de ladite tête de tambour comportent: une charnière de bride (35) montée sur ledit corps de tambour à coke (1) ; une charnière de couvercle (36) montée sur ladite tête de tambour à coke (25) et une tige réunissant ladite charnière de bride (35) et ladite charnière de couvercle (36).

3. Dispositif selon l'une ou l'autre des revendications précédentes, dans lequel une paire de vérins hydrauliques d'actionnement (21,22) sont montés fonctionnellement pour faire pivoter ladite tête de tambour (25) pour ouvrir et fermer ledit orifice de sortie (13).

4. Dispositif selon la revendication 3, comprenant en outre une paire de joints universels (30,31) disposés fonctionnellement entre la tête de tambour (25) et les organes hydrauliques d'actionnement (21,22) de telle sorte qu'un déploiement des organes hydrauliques d'actionnement (21,22) provoque un pivotement de la tête de tambour (25) par rapport à l'orifice d'évacuation (13).

5. Dispositif selon l'une quelconque des revendications précédentes, comprenant en outre des moyens de renfort (15) montés sur la partie inférieure (11) dudit corps de tambour pour supporter lesdits organes d'actionnement (21, 22), lesdits moyens de renfort comprenant une ou plusieurs pattes de montage (29) pour constituer un support pour lesdits moyens d'actionnement (21,22).

6. Dispositif selon la revendication 5, dans lequel le corps de tambour (1) possède une partie cylindrigue supérieure et une partie tronconique inférieure (11) se terminant en un orifice de sortie de tambour cylindrique (13); les moyens de renfort comportent une bague de renfort (15) montée circonférentiellement sur ladite partie inférieure tronconique, ladite bague de renfort comprenant une ou plusieurs pattes de montage (29) pour constituer un support des moyens d'actionnement.

7. Dispositif selon l'une quelconque des revendications précédentes, dans lequel ladite tête de tambour (25) est circulaire et configurée pour s'adapter audit orifice de sortie du tambour et possède, monté sur elle, un renfort de couvercle généralement en forme de T comprenant une partie support d'organe d'actionnement et une partie support d'articulation, ladite partie support d'articulation possédant une charnière de couvercle (35) s'en éloignant, et ladite partie support d'organe d'actionnement possédant, montés à pivotement à ses extrémités, une paire de joints universels (30,31) pour constituer une liaison à une paire d'organes d'actionnement.

8. Dispositif selon l'une quelconque des revendications précédentes, dans lequel la tête de tambour (25) possède un orifice la traversant, une canalisation (50) reliée à la tête de tambour à son orifice s'en éloignant vers l'extérieur.

9. Dispositif selon la revendication 8, dans lequel une canalisation d'alimentation (52) est reliée de façon amovible à l'extrémité de ladite canalisation (50) éloignée de ladite tête de tambour.

10. Dispositif selon l'une quelconque des revendications précédentes, dans lequel lesdits moyens de verrouillage de sécurité (37) sont montés à pivotement sur ledit orifice de tambour par des pattes supports (38), lesdits moyens de verrouillage de sécurité pouvant pivoter entre des positions de fermeture et d'ouverture à l'aide d'un organe d'actionnement (39).

11. Dispositif selon l'une quelconque des revendications précédentes, dans lequel ledit tambour (1) possède une partie tronconique (11) adjacente audit orifice de sortie (13).

12. Dispositif selon la revendication 8, dans lequel l'extrémité supérieure du ou de chaque organe d'actionnement hydraulique (21,22) est fixée adjacente à l'extrémité supérieure de ladite partie de tambour tronconique.

13. Procédé de cokéfaction différée, comportant le préchauffage de l'hydrocarbure délivré à un tambour réservoir (1) possédant un orifice d'évacuation (13) et apte à produire du coke de pétrole pour provoquer un craquage thermique de molécules d'hydrocarbure dans ledit hydrocarbure délivré et ainsi produire une masse de coke de pétrole; l'introduction ultérieure de vapeur dans le tambour réservoir (1) à une température et en quantité suffisantes pour éliminer l'hydrocarbure résiduel de l'hydrocarbure délivré et le coke de pétrole demeurant dans le réservoir, et ensuite l'ouverture du tambour (1) en déplaçant, par utilisation de moyens d'actionnement hydrauliques commandés à distance (21,22), une tête de tambour (25) depuis une position de fermeture au-dessus de l'orifice d'évacuation (13) vers une position d'ouverture, caractérisé en ce qu'un verrou de sécurité (37) est engagé entre le tambour (1) et la tête de tambour (25) avant dégagement des moyens (34) retenant la tête de tambour dans sa position de fermeture et est ensuite dégagé après libération des moyens de retenue (34) pour permettre aux moyens hydrauliques d'actionnement (21,22) de faire pivoter la tête de tambour autour d'un axe de liaison de pivotement au tambour (1) depuis sa position de fermeture de l'orifice de sortie jusqu'à une position ouverte suspendue vers le bas.

FIG. 1.
PRIOR ART.

COKE DRUM 1

COKE DRUM 2

(2) 2 TON CHAIN HOISTS FOR LIFTING CHUTE

HYDRAULIC COVER LIFT ON TRACKS

REMOVABLE COVER

COLLAPSIBLE CHUTE

COKE CHUTE

COKE CHUTE

EP 0 353 023 B1

FIG.2.

fig.3.

fig.4.

FIG.5.

FIG.6.